# EUROPEAN PATENT APPLICATION

(11) **EP 3 569 404 A1**
(43) Date of publication of application: **20.11.2019**
(21) Application number: 18172946.8
(22) Date of filing: 17.05.2018
(51) Int. Cl.: B32B 7/12, B32B 27/08, B32B 27/30, B32B 27/32, B32B 27/36, B32B 27/40, B32B 37/00

(54) **OSTOMY POUCH COMPRISING A CHLORINE-FREE MULTI-LAYER FILM AND RELATED METHOD**

(71) Applicant: Amcor Flexibles Transpac NV, 9000 Gent (BE)
(72) Inventor: CATTOOR, Ko, 9040 SINT-AMANDSBERG (BE); VERLODT, Ingeborg, 9920 LOVENDEGEM (BE); MASSEY, Robert James, BRISTOL, BS36 2LJ (GB); MALFAIT, Tony, 8880 ROLLEGEM-KAPELLE (BE)
(74) Representative: Pronovem

(57) **Abstract**

The present invention is related to an ostomy pouch comprising a laminated, substantially chlorine-free, multi-layer film comprising at least one barrier layer and at least one sealable skin layer; wherein the barrier layer is an oriented barrier layer comprising oriented polyester or oriented polypropylene; and the skin layer comprises styrene-based copolymers, ethylene-based (co)polymers, thermoplastic polyurethanes, cyclic olefin based (co)polymers, ionomer resins, elastomeric polyesters, or any kind of blends thereof. A method for fabricating the substantially chlorine-free multi-layer film of the ostomy pouch is provided as well.

## Description

### Field of the invention

The present invention relates to an ostomy pouch comprising a laminated, substantially chlorine-free, multi-layer film and to a related method.

### State of the art

Providing discretion and privacy is of great importance in the quality of life of ostomy patients. In order to avoid possible embarrassment to the users, films for ostomy applications should be flexible, soft, have sufficient mechanical strength and good odour-barrier properties, and produce minimal noise when being flexed or wrinkled.

In the art, the gas-barrier layer of a multi-layer film used for ostomy applications often comprises polyvinyl chloride (PVC) or polyvinylidene chloride (PVdC). Such multi-layer films have good resistance to odour transmission and are also relatively quiet. However, they have the disadvantage of being hazardous to the environment when being disposed of.

As an alternative to these PVC- and PVdC-based multi-layer films, more environment-friendly multi-layer films being free of halogens (or being chlorine-free) have already been proposed in the art for use in ostomy appliances. Typically, such films are formed by (single step) coextrusion of an aroma-barrier layer with soft skin and bonding layers, to provide noise-dampening. An example of such a multi-layer film is described in WO 2007/110080.

The level of odour barrier obtained by such halogen-free multi-layer films depends on the chemistry of the barrier material in combination with its thickness.

In WO 2007/110080, for example, the aroma-barrier layer comprises thermoplastic stiff polyurethane (TPU) or cyclic polyolefins (COC). Also ethylene vinyl alcohol (EVOH), polyethylene terephthalate glycol-modified (PETG) or amorphous polyamide (PA) have been used in the art as halogen-free barrier material. These polymeric materials are indeed effective aroma barriers, due to their molecular architecture (such as polarity, crystallinity, density, etc.); however, their hardness and stiffness risk to generate noise. In other words, multi-layer films using such halogen-free polymers as barrier material tend to have the disadvantage of being stiffer and noisier than films utilizing conventional PVC- or PVdC-based multi-layer films, which is to be avoided when used in ostomy appliances.

In order to match the quality of conventional chlorinated films for use in ostomy applications, the stiffness of the halogen-free barrier layers used in the art is to be compensated through the entire structure of the multi-layer. Thereto, sufficient softness has to be provided in skin and bonding layers. However, with increasing softness of the skin layers, the resulting multi-layer film suffers from blocking in the jumbo master reel used in the coextrusion process, preventing smooth unwinding during the further down-stream processing. Hence, this complicates the overall production process. Moreover, stickiness in a reel can result in elongation and permanent deformation of such soft films as well, being disadvantageous for the resulting multi-layer film.

Another problem confronted with in the art while making halogen-free films, is the high processing temperature difference between the hard-core layer and the soft-skin layer. Indeed, the above-mentioned polymers are known to extrude at relatively high temperatures, while soft-skin materials require low temperature extrusion. Simultaneous extrusion of the latter as outer layers, together with the internal barrier material, can therefore result in sticking to guidance rollers and formation of wrinkles. This has the detrimental effect of creating visual defects such a sticking points and strikes. Furthermore, at these high temperatures, degradation occurs with the creation of volatiles and die-deposits which will contaminate the resulting film.

Therefore, there is a need for a halogen-free multi-layer film for ostomy applications overcoming the above problems and disadvantages encountered with the halogen-free (single-step) extruded aroma-barrier films used in ostomy pouches in the art up to now.

### Aims of the invention

The present invention aims to provide an ostomy pouch comprising an environment-friendly multi-layer film overcoming the disadvantages of halogen-free (or chlorine-free) extruded aroma-barrier films used in ostomy pouches in the art.

The present invention thereby aims to provide multi-layer films being environment-friendly, having sufficient physical strength, being quiet upon flexing, and exhibiting a high barrier to odours, to be used for producing quiet, discrete ostomy bags.

### Summary of the invention

According to an aspect of the invention, there is provided an ostomy pouch comprising (at least one wall formed from) a laminated multi-layer film being substantially free of halogens. More particularly, an ostomy pouch comprising (at least one wall formed from) a substantially chlorine-free (or non-chlorinated) multi-layer film is provided, as set out in the appended claims.

More particularly, the present invention discloses an ostomy pouch comprising a laminated, substantially chlorine-free, multi-layer film (10), said multi-layer film (10) comprising
- at least one barrier layer (11), and
- at least one sealable skin layer (12),
wherein
- the barrier layer is an oriented barrier layer comprising oriented polyester or oriented polypropylene; and
- the skin layer comprises styrene-based copolymers, ethylene-based (co)polymers, thermoplastic polyurethanes, cyclic olefin based (co)polymers, ionomer resins, elastomeric polyesters, or any kind of blends thereof.

Preferred embodiments of the present invention disclose at least one, or an appropriate combination, of the following features:
- the multi-layer film (10) comprises one barrier layer or a laminated stack of barrier layers;
- the barrier layer is a single layer or a co-extruded multilayer;
- the barrier layer (11) comprises oriented polyester, preferably bi-axially oriented polyester;
- the oriented polyester comprises oriented polyethylene terephtalate or oriented polyethylene naphthalate, preferably oriented polyethylene terephtalate;
- the multi-layer film (10) comprises one skin layer (12) or two skin layers (12, 13);
- the skin layer is a single layer or a co-extruded multilayer, preferably a co-extruded multilayer;
- the skin layer is a blend of low-density polyethylene and linear low-density polyethylene;
- the skin layer is a blend of low-density polyethylene and linear low-density polyethylene C4 butene with resin ratio 30 to 70;
- the skin layer is a co-extrudate of ethylene vinyl acetate copolymer and ethylene butyl acrylate copolymer, or a co-extrudate of ethylene methyl acrylate copolymer and ethylene butyl acrylate copolymer;
- the skin layer is a co-extruded multilayer of EVA and EBA, the EVA having a vinyl acetate content between 16 and 20% by weight, preferably of 18% by weight, and the EBA having a butyl acrylate content between 25 and 35% by weight, preferably of 30% by weight; or the skin layer is a co-extruded multilayer of EMA and EBA, the EMA having a methacrylate content between 16 and 20% by weight, preferably of 18% by weight, and the EBA having a butyl acrylate content between 15 and 19% by weight, preferably of 17% by weight;
- the skin layer is a co-extruded multilayer comprising (or consisting of, i.e. having a structure of) EVA having a vinyl acetate content between 16 and 20% by weight/ EBA having a butyl acrylate content between 25 and 35% by weight/ EVA having a vinyl acetate content between 16 and 20% by weight, preferably EVA having a vinyl acetate content of 18% by weight/ EBA having a butyl acrylate content of 30% by weight/ EVA having a vinyl acetate content of 18% by weight; or a co-extruded multilayer comprising (or consisting of, i.e. having a structure of) EMA having a methacrylate content between 16 and 20% by weight/ EBA having a butyl acrylate content between 15 and 19% by weight/ EBA having a butyl acrylate content between 15 and 19% by weight, preferably EMA having a vinyl acetate content of 18% by weight/ EBA having a butyl acrylate content of 17% by weight/ EBA having a vinyl acetate content of 17% by weight;
- the pouch comprises an adhesive layer (14) positioned between the skin layer and the barrier layer (11) or between the skin layer and the stack of barrier layers, wherein the adhesive layer is obtained from a pressure-sensitive adhesive, preferably from a curable pressure-sensitive adhesive;
- the pouch has at least one wall formed from the laminated, substantially chlorine-free, multi-layer film (10), said film (10) comprising one oriented barrier layer (11) or stack of oriented barrier layers, one skin layer (12), and one adhesive layer (14) positioned between the skin layer (12) and the barrier layer (11) or between the skin layer (12) and the stack of barrier layers, wherein the adhesive layer (14) is in direct contact with the facing surfaces of the barrier layer (11) or of the stack of barrier layers and the skin layer (12);
- the pouch has at least one wall formed from the laminated, substantially chlorine-free, multi-layer film (10), said film (10) comprising one oriented barrier layer (11) or stack of oriented barrier layers, two skin layers (12, 13), and two adhesive layer (14, 15), wherein the barrier layer (11) or stack of barrier layers is positioned in between the two skin layers (12, 13); the two adhesive layers (14, 15) being provided on opposite sides of the barrier layer or of the stack of barrier layers, the adhesive layer (14, 15) on either side of the barrier layer (11) or of the stack of barrier layers being in direct contact with the facing surfaces of the barrier layer (11) or of the stack of barrier layers and the skin layer (12, 13).

According to another aspect of the invention, there is provided a method for fabricating the substantially chlorine-free multi-layer film of (at least one wall of) the ostomy pouch of the invention, as set out in the appended claims.

More particularly, a method is provided for fabricating the substantially chlorine-free multi-layer film of the ostomy pouch of the invention, the method comprising the steps of forming the at least one oriented barrier layer (11), preferably forming one barrier layer (11) or laminated stack of barrier layers; and bonding the at least one skin layer (12) to the at least one oriented barrier layer (11) by adhesive lamination or extrusion lamination, preferably by adhesive lamination.

Preferred embodiments of the method of the present invention disclose at least one, or an appropriate combination, of the following features:
- the adhesive layer (provided during the adhesive lamination) being obtained from a solvent-based composition comprising one or more components selected from the group consisting of (co)polymers, oligomers and monomers; the solvent being selected from the group consisting of organic solvents, water and mixtures thereof, or from a solvent-free composition;
- for the solvent-based adhesive composition, the adhesive layer (provided during the adhesive lamination) being obtained from evaporating the solvent and optionally curing the composition;
- the curing being performed by heat and/or by actinic irradiation.

### Short description of the drawings

Embodiments of aspects of the invention will now be described in more detail with reference to the appended drawings, wherein same reference numerals illustrate same features:
(1) noise isolated box
(2) isolation
(3) motor
(4) rotating wheel
(5) moving clamp
(6) fixed clamp
(20) sample
(8) microphone
(9) 1/3 octave frequency analyser
(10) laminated chlorine-free multi-layer film
(11) oriented barrier layer
(12,13) skin layer
(14,15) adhesive layer
(16) ostomy pouch
(16a,16b) walls of pouch
(17) peripheral edge portions of pouch 16
(18) stoma-receiving opening
(19) adhesive attachment ring
   **Fig. 1** schematically represents a laminated chlorine-free multi-layer film 10 of the ostomy pouch of the invention comprising an oriented barrier layer 11, a sealable skin layer 12, and an adhesive layer 14 positioned between the skin layer and the barrier layer.
   **Fig. 2** schematically represents a laminated chlorine-free multi-layer film 10 of the ostomy pouch of the invention wherein two skin layers 12, 13 and two adhesive layers 14, 15 are provided on opposite sides of a barrier layer, the adhesive layers 14, 15 being in direct contact with the barrier layer 11.
   **Fig. 3** schematically represents an ostomy pouch 16 of the invention comprising a laminated multi-layer film, the pouch having two walls 16a, 16b each comprising (or each being made of) a laminated chlorine-free multi-layer film 10 having an oriented barrier layer 11 (or stack of oriented barrier layers) laminated with at least one sealable skin layer 12; said skin layers of said walls facing each other and being heat-sealed along peripheral edge portions 17 of said pouch.
   **Fig. 4** (top view) and **Fig. 5** (front view) schematically represent a noise-isolated box 1 designed to evaluate noise produced by samples of laminated multi-layer films while being flexed.

### Detailed description of the invention

According to an aspect of the invention, there is provided an ostomy pouch comprising a laminated multi-layer film being substantially free of halogens (or, more particularly, being substantially free of chlorine).

In the context of the present description, the wording *"substantially free of halogens"* (or *"substantially free of chlorine*") refers to a multi-layer film with a halogen (or chlorine) content of less than 1000 ppm, advantageously less than 500 ppm, advantageously less than 250 ppm, advantageously less than 100 ppm.

More particularly, referring to **Fig. ₁**, the present invention provides an ostomy pouch comprising a laminated, substantially chlorine-free, multi-layer film 10, said multi-layer film comprising:
- at least one barrier layer 11, advantageously one barrier layer 11 or a laminated stack of barrier layers (i.e. two, three, or more barrier layers 11 laminated against each other thereby forming a (or one) stack of barrier layers), advantageously one barrier layer 11; and
- at least one sealable skin layer 12, advantageously one skin layer 12 or two skin layers 12, 13, advantageously two skin layers 12, 13;
wherein
- the barrier layer is an oriented barrier layer comprising (or consisting of) oriented polyester or oriented polypropylene (oPP); and
- the skin layer comprises (or consists of) styrene-based copolymers, ethylene-based (co)polymers, thermoplastic polyurethanes (TPU), cyclic olefin based (co)polymers, ionomer resins, elastomeric polyesters, or any kind of blends thereof.

Advantageously, the ostomy pouch of the invention comprises at least one wall formed from the laminated, substantially chlorine-free, multi-layer film 10.

In the present invention, the barrier layer 11 is an oriented layer, wherein the degree of crystallinity is comprised between 10 and 80%, as for example evaluated from melting enthalpy values as measured with differential scanning calorimetry, the remaining fraction being the amorphous phase (or non-crystalline region). Advantageously, the degree of crystallinity is comprised between 10 and 60%, advantageously between 15 and 50% for oriented polyester, and between 30 and 80%, advantageously between 40 and 75% for oriented polypropylene film. Without being bound by any theory, the inventors presume that the combination of an increased degree of crystallinity and a densified amorphous phase induced by stretching the polymer film, improves the barrier properties of the barrier layer.

Oriented barrier films (even without a coextruded or coated functional barrier layer) have good aroma-barrier properties due to their mono-axial and/or bi-axial polymer orientation creating a tortuous path for the aroma to permeate through (the aroma thereby diffusing mainly through the amorphous phase of the oriented layer). Hence, the multi-layer film 10 of the ostomy pouch of the invention comprising the oriented barrier layer 11 has low permeability to gases (such as CO₂, N₂, and H₂S gases, as well as to other gases and odours or aroma). Moreover, the multi-layer film 10 with the oriented barrier layer 11 exhibits barrier properties against oxygen and moisture as well. However, one skilled in the art would not consider using such an oriented film in ostomy appliances as it would be expected that, due to its crystallinity and stiffness, such a film would be too noisy. Indeed, in the art, it is in fact known that by introducing less orientation into the films, the film will be less noisy. With the present application, however, it has surprisingly been observed that the presence of an oriented barrier layer together with a skin layer in a multi-layer film laminate is reaching noise levels of the halogen-free (or chlorine-free) aroma-barrier films used in the art for ostomy appliances up to now. More particularly, with the present application it has been observed that the presence of a soft skin layer in the multi-layer film is providing noise dampening to the film, making it extremely suitable for use in ostomy applications, contrary to what the skilled in the art would expect based on the orientation of the film.

Advantageously, the barrier layer 11 comprises (or consists of) oriented polypropylene, advantageously bi-axially oriented polypropylene (BoPP).

Alternatively and more advantageously, the barrier layer 11 comprises (or consists of) oriented polyester, advantageously bi-axially oriented polyester. Advantageously, the oriented polyester comprises (or consists of) oriented polyethylene terephtalate (oPET or BoPET) or oriented polyethylene naphthalate (oPEN or BoPEN), advantageously oriented polyethylene terephtalate, advantageously bi-axially oriented polyethylene terephtalate (BoPET).

Advantageously, the barrier layer 11 (or stack of barrier layers) has a thickness between 2 µm and 20 µm, advantageously between 3 µm and 15 µm, advantageously between 4 µm and 10 µm, advantageously between 5.5 µm and 10 µm.

Advantageously, the barrier layer 11 is a single layer (monolayer) or a co-extruded multilayer (co-extruded multilayer film). Suitable methods for producing co-extruded multilayer barrier films will be apparent for those skilled in the art.

For the particular case of the barrier layer being a biaxially oriented co-extruded (polyester) multilayer film, the process for producing the biaxially oriented film is based on a cast coextrusion process. The procedure for this process is that the melts corresponding to the individual layers (A), (B), (C) or more of the film are coextruded through a flat-film die. The resulting film is drawn-off for solidification on one or more rolls. The film is then biaxially stretched (oriented), and the biaxially-stretched film is heat-set and, if desired, corona- or flame-treated on the surface layer intended for treatment. The biaxial stretching (orientation) is generally carried out sequentially, and preference is given to sequential biaxial stretching, in which stretching is first longitudinal (in the machine direction) and then transverse (perpendicular to the machine direction). Today, simultaneously-stretched, biaxially-oriented films are available on the market too. During coextrusion, the polymer or the polymer mixture for the individual layers is first compressed and plasticized in an extruder. The melt streams are then simultaneously extruded through a flat-film die and the extruded multilayer film is drawn off on one or more take-off rolls, whereupon it cools and solidifies. In the sequential process, first the orientation is made longitudinally (in the machine direction: MD) and then transversely (perpendicularly to the machine direction: TD). The longitudinal orientation can be carried out with the aid of two rolls running at different speeds corresponding to the desired stretching ratio. For the transverse orientation, use is generally made of an appropriate tenter frame, clamping both edges of the film and then drawing toward the two sides at an elevated temperature. The temperature at which the orientation is carried out may vary over a relatively wide range. The longitudinal stretching is generally carried out at from about 80 to 130°C, and the transverse stretching at from about 80 to 150°C. The longitudinal stretching ratio is generally in the range from 2.5:1 to 6:1, preferably from 3:1 to 5:1. The transverse stretching ratio is generally in the range from 3.0:1 to 5.0:1, preferably from 3.5:1 to 4.5:1. Prior to the transverse stretching, one or both surfaces of the film may be in-line coated by known processes. The in-line coating may serve, for example, to give improved adhesion properties and/or to give additional barrier improvement.

The barrier layer of the present invention can further comprise a coextruded or coated (functional barrier) layer comprising, for example, polymers of (co)polymerized alkyl(meth)acrylate monomers, or EVOH (co)polymers.

The sealable skin layer in the multi-layer film of the ostomy pouch of the invention can be a single layer (monolayer) or a multilayer (multilayer film), advantageously the sealable skin layer is a co-extruded multilayer (co-extruded multilayer film).

In the context of the present description, a sealable skin layer (or multilayer) is referred to as skin, skin layer, sealable skin, seal layer or sealing layer.

The skin layer in the multi-layer film of the ostomy pouch of the invention is a soft, sound-deadening (multi)layer.

Advantageously, the skin layer comprises (or consists of):
- styrene-based copolymers selected from the group consisting of styrene ethylene butylene styrene copolymer (SEBS), styrene ethylene propylene styrene copolymer (SEPS), styrene butadiene styrene copolymer (SBS), styrene isoprene styrene copolymer (SIS), styrene-isobutylene-styrene copolymer, styrene-propylene-styrene copolymer, styrene-isoprene copolymer, styrene-isoprene-butadiene-styrene copolymer, styrene-isoprene-butadiene-styrene copolymer, styrene-butylene-butadiene-styrene copolymer, and combinations thereof;
- ethylene-based polymers selected from the group consisting of pure polyethylene in the form of low density polyethylene (LDPE), linear low density polyethylene (LLDPE), ultralow density polyethylene (ULDPE), medium density polyethylene (MDPE), and high density polyethylene (HDPE);
- ethylene-based copolymers selected from the group consisting of ethylene methyl acrylate copolymer (EMA), ethylene vinyl acetate copolymer (EVA), ethylene butyl acrylate copolymer (EBA), ethylene-ethyl acrylate (EEA), ethylene acrylic acid copolymer (EAA), ethylene-methyl acrylic acid copolymers (EMAA), EVA-carbon monoxide copolymers (EVACO), MAH-modified polyethylene, maleic anhydride modified EVA, MAH-EMA, MAH-EBA, glycidyl methacrylate modified EMA, glycidyl methacrylate modified EBA, glycidyl methacrylate modified EVA, ethylene butylene copolymer, ethylene 4-methyl pentene copolymer, ethylene hexene co-polymer, ethylene octene copolymer, ethylene propylene copolymer, ethylene butylene propylene ter-polymer, and combinations thereof; or
- any kind of blends thereof.

More advantageously, the skin layer comprises (or consists of):
- ethylene-based polymers selected from the group consisting of pure polyethylene in the form of LDPE, LLDPE, ULDPE, MDPE, HDPE, and combinations thereof; advantageously selected from the group consisting of pure polyethylene in the form of LDPE, LLDPE, and combinations thereof;
- ethylene-based copolymers selected from the group consisting of EMA, EVA, EBA, EEA, EAA, EMAA, EVACO, MAH-modified polyethylene, maleic anhydride modified EVA, MAH-EMA, MAH-EBA, glycidyl methacrylate modified EMA, glycidyl methacrylate modified EBA, glycidyl methacrylate modified EVA, ethylene butylene copolymer, ethylene 4-methyl pentene copolymer, ethylene hexene co-polymer, ethylene octene copolymer, ethylene propylene copolymer, ethylene butylene propylene ter-polymer, and combinations thereof; advantageously selected from the group consisting of EMA, EVA, EBA, and combinations thereof; or
- any kind of blends thereof.

Even more advantageously, the skin layer comprises (or consists of):
- a blend of LDPE and LLDPE; or
- a co-extrudate of EVA copolymer and EBA copolymer, or a co-extrudate of EMA copolymer and EBA copolymer.

Most advantageously, the skin layer is a co-extruded multilayer of EVA and EBA, the EVA having a vinyl acetate content between 16 and 20% by weight, advantageously of 18% by weight, and the EBA having a butyl acrylate content between 25 and 35% by weight, advantageously of 30% by weight; or the skin layer is a co-extruded multilayer of EMA and EBA, the EMA having a methacrylate content between 16 and 20% by weight, advantageously of 18% by weight, and the EBA having a butyl acrylate content between 15 and 19% by weight, advantageously of 17% by weight.

Advantageously, the skin layer has a thickness between 20 µm and 100 µm, advantageously between 25 µm and 65 µm, advantageously between 30 µm and 50 µm.

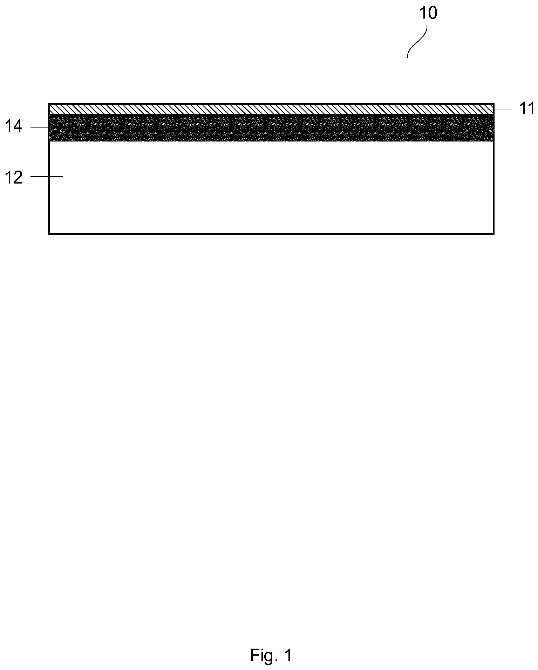

The multi-layer film can further comprise an adhesive layer 14 positioned between the skin layer and the barrier layer, as for example schematically illustrated in **Fig. 1**. Alternatively (not shown), using a stack of barrier layers, the multi-layer film can further comprise an adhesive layer 14 positioned between the skin layer and the stack of barrier layers.

Advantageously, in aspects of the invention, the adhesive layer is obtained from a solvent-based composition comprising one or more components selected from the group consisting of (co)polymers, oligomers and monomers, the solvent being selected from the group consisting of organic solvents, water, and mixtures thereof; or the adhesive layer is obtained from a solvent-free composition, such as for example a hot melt adhesive.

More particularly, for the solvent-based adhesive composition, the adhesive layer is obtained from evaporating the solvent and optionally curing the composition, wherein curing is advantageously performed by heat (i.e. from room temperature to 100°C, advantageously from 50 to 90°C) and/or by actinic irradiation (i.e. ultraviolet or electron beam).

For the particular case of a solvent-free adhesive composition, heat may be used to liquefy the composition in order to generate adequate viscosity for guaranteeing sufficient wetting of the substrate(s) and optionally to induce curing. Alternatively, curing of the solvent-free adhesive compositions may be initiated by actinic irradiation, at a temperature comprised between room temperature and 70°C.

With the present invention, it has been demonstrated that the adhesive layer adds a sound-deadening property to the sound-insulating property already provided by the (soft) skin layers of the multi-layer film. Indeed, with the multi-layer film of the ostomy pouch of the invention, noise dampening is obtained by the skin layer, the effect being further enhanced by the presence of the adhesive layer.

Advantageously, the adhesive layer is polyurethane, (meth)acrylic copolymer, or styrene copolymer based; advantageously, the adhesive layer is polyurethane or (meth)acrylic copolymer based.

In the context of the present description, a polyurethane-based adhesive is obtained from the reaction of one or more (cyclo)aliphatic and/or aromatic diisocyanates with one or more (cyclo)aliphatic polyol component.

In the context of the present description, a (meth)acrylic copolymer based adhesive refers to an adhesive comprising one or more copolymers comprising monomers selected from the group consisting of (meth)acrylic acid and alkyl esters of (meth)acrylic acid.

In the context of the present description, a styrene copolymer based adhesive refers to an adhesive comprising one or more copolymers of styrene, optionally a styrene block copolymer such as a styrene butadiene block copolymer.

The polyurethanes, the (meth)acrylic copolymers, and the styrene copolymer(s) of the adhesive composition optionally comprise functional groups capable of crosslinking under influence of heat and/or actinic irradiation.

More advantageously, the adhesive layer is obtained from a curable or non-curable adhesive. Even more advantageously, the adhesive layer is obtained from a (curable or non-curable) pressure-sensitive adhesive, most advantageously, the adhesive layer is obtained from a curable pressure-sensitive adhesive.

Tackifiers are conventionally used in the art of (pressure-sensitive) adhesives and the type of tackifier that can be used in the present invention is not particularly limited. Non-limiting examples of possibly suitable tackifiers include rosin-based tackifying resins, terpene-based tackifying resins, hydrocarbon-based tackifying resins, epoxy-based tackifying resins, polyamide-based tackifying resins, elastomer-based tackifying resins, phenol-based tackifying resins, ketone-based tackifying resins, and the like. The tackifying resin can be used solely or in combination of two or more thereof.

The adhesives can further comprise additives such as antioxidants, wetting agents, flowing agents, plasticizers, colorants, rheology modifiers, and/or any other additive known to those skilled in the art.

Advantageously, the adhesive layer has a thickness between 3 µm and 30 µm, advantageously between 4 µm and 12 µm, advantageously between 2 µm and 5 µm.

Advantageously, and schematically illustrated in **Fig. 1**, the multi-layer film 10 of the ostomy pouch of the invention comprises (or consists of):
- one oriented barrier layer 11 or stack of oriented barrier layers (not shown in Fig. 1);
- one skin layer 12; and
- an adhesive layer 14 positioned between the skin layer 12 and the barrier layer 11 or between the skin layer (12) and the stack of barrier layers, wherein the adhesive layer 14 is in direct contact with facing surfaces of the barrier layer 11 or of the stack of barrier layers and skin layer 12 (so as to substantially continuously bond the skin layer 12 to the barrier layer 11 or to the stack of barrier layers).

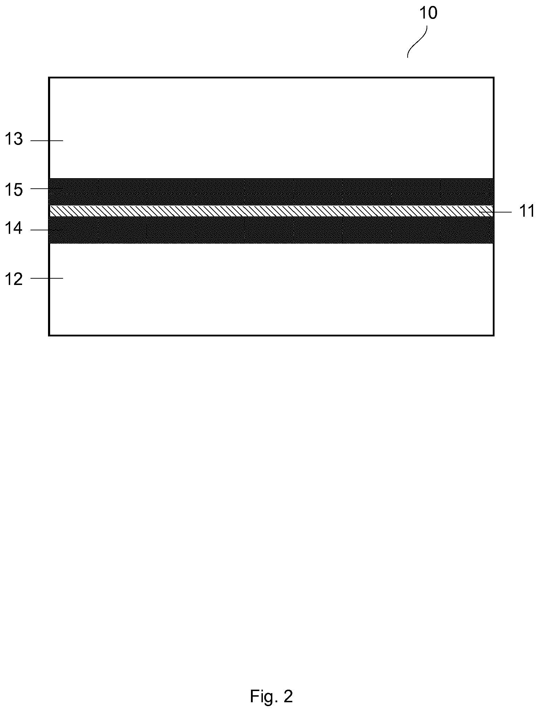

More advantageously, the barrier layer 11 is positioned in between two skin layers 12, 13, as schematically illustrated in **Fig. 2**. Using a stack of barrier layers (not shown in Fig. 2), the stack of barrier layers is positioned in between the two skin layers 12, 13. Two adhesive layers 14, 15 are provided on opposite sides of the barrier layer or of the stack of barrier layers, the adhesive layer 14, 15 on either side of the barrier layer 11 or of the stack of barrier layers being in direct contact with facing surfaces of the barrier layer 11 or of the stack of barrier layers and skin layer 12, 13 (so as to substantially continuously bond the skin layer 12, 13 to the barrier layer 11 or to the stack of barrier layers). In other words, on either side of the barrier layer or of the stack of barrier layers is a skin layer and an adhesive layer; the two adhesive layers each contacting one side of the barrier layer or of the stack of barrier layers. The adhesive layer (on either side of the barrier layer or of the stack of barrier layers) is thereby substantially coextensive with facing surfaces of the skin layer and barrier layer or of the skin layer and stack of barrier layers, so as to substantially continuously bond the skin layer to the barrier layer or to the stack of barrier layers.

More particularly, referring to **Fig. 2**, one oriented barrier layer (11) or stack of oriented barrier layers is positioned in between (or is sandwiched between) a first and a second skin layer 12, 13; a first and a second adhesive layer 14, 15 is provided on opposite sides of the (one) barrier layer 11 or of the stack of barrier layers, the first and second adhesive layer 14, 15 being in direct contact with the barrier layer 11 or with the stack of barrier layers, the first skin layer 12 being in direct contact with the first adhesive layer 14, and the second skin layer 13 being in direct contact with the second adhesive layer 15.

Advantageously, the multi-layer film of the ostomy pouch of the invention has a total thickness between 48 µm and 280 µm, advantageously between 60 µm and 150 µm, advantageously between 80 µm and 120 µm.

Advantageously, when being flexed, the multi-layer film 10 of the ostomy pouch of the invention exhibits a noise of less than 85 dB(A) (or A-weighted decibels), advantageously of less than 75 dB(A), advantageously of less than 70 dB(A).

The laminated, substantially chlorine-free multi-layer of the ostomy pouch of the invention is hence quiet enough for ostomy applications, comparable to existing PVC- and PVdC-based films used therefor in the art.

The multi-layer film 10 of the ostomy pouch of the invention can be obtained by a (lamination) process selected from the group consisting of adhesive lamination or extrusion lamination, advantageously adhesive lamination.

In another aspect of the invention, a method for fabricating the substantially chlorine-free multi-layer film 10 of the (at least one wall of the) ostomy pouch of the invention is provided, the method comprising the steps of:
(a) forming the at least one oriented barrier layer 11, advantageously forming the one barrier layer 11 or forming the stack of two, three, or more barrier layers 11 laminated against each other, more advantageously forming the one barrier layer 11;
(b) bonding the at least one skin layer 12, advantageously the one or two skin layers 12, 13, to the at least one oriented barrier layer 11 (advantageously to the one barrier layer 11 or to the stack of barrier layers, more advantageously to the one barrier layer 11) by adhesive lamination or extrusion lamination (the skin layer being a single layer or a co-extruded multilayer, advantageously a co-extruded multilayer), advantageously by adhesive lamination.

As such, in addition to the advantageous properties of being substantially chlorine-free, having low noise when flexed or wrinkled, and being impermeable to (faecal) odours (as well as to moisture), the multi-layer laminate of the ostomy pouch of the invention does not suffer from the extrusion problems in combining a hard aroma-barrier layer with soft skin layers. Hence, the multi-layer of the ostomy pouch of the invention can be more efficiently manufactured compared to existing prior-art halogen-free (single step) extruded aroma-barrier films used for ostomy applications.

The laminated multi-layer film of the pouch of the invention can be used as well in an incontinence bag, a trans-dermal delivery system, a cosmetic patch, a medical collection bag or a parenteral solution bag, an odorous food packaging, or a protective clothing.

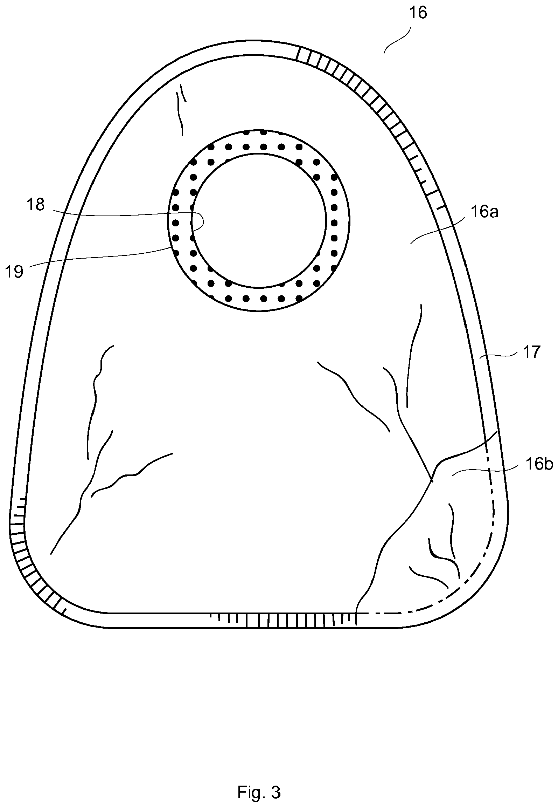

An example of an ostomy pouch 16 of the invention is schematically illustrated in **Fig. 3****.** The pouch 16 has two walls 16a, 16b each formed from the multi-layer films of **Fig. 1** or **Fig. 2**; the skin layers of each wall are facing each other and are being (heat-)sealed along peripheral edge portions 17 of the pouch 16 (so as to define a cavity). One wall of the pouch has a stoma-receiving opening 18 formed therein and an adhesive attachment ring 19 is located about that opening for adhesive attachment to the peristomal skin surfaces of a patient. The pouch as shown is generally referred to as a one-piece appliance but, if desired, a mechanical coupling ring may be substituted for adhesive ring 19, with the pouch therefore becoming one component of a two-piece ostomy appliance.

Using, in a pouch as illustrated in **Fig. 3**, the multi-layer film 10 represented in **Fig. 1** for forming each of the two walls of the pouch, the barrier layer 11 (or stack of barrier layers) is the outer layer of the pouch.

Using, in a pouch as illustrated in **Fig. 3**, the multi-layer film 10 represented in **Fig. 2** for forming each of the two walls of the pouch, one of the two skin layers 12 or 13 is the outer layer of the pouch.

### Examples

### A. Noise measurements

In this example, noise produced by various samples (cf. **Table 1, Samples 2 to 8**) of laminated multi-layer films is evaluated. More particularly, noise produced by the samples is recorded and analysed by A-weighting.

In the A-weighted system, A-weighted decibels (abbreviated dB(A)) are an expression of relative loudness of sounds in air as perceived by the human ear. A normal human ear is able to hear sounds with frequencies from 20 Hz to 20 000 Hz. This range is called the audible frequency range. The entire audible frequency range can be divided into 8 or 24 frequency bands, known as octave bands or 1/3 octave bands respectively, for analysis. A particular sound or noise can be seen to have different strengths or sound-pressure levels in the frequency bands. A sound is then the result of adding the contribution from all octave bands, or 1/3 octave bands, together to yield one single sound-pressure level. The response of the ear to sound is dependent on the frequency of the sound. The human ear is most sensitive to a frequency of around 2500 to 3000 Hz and has a relatively low response at low frequencies. This non-linearity in sensitivity to sound has led to the concept of weighting scales. In the A-weighting scale (or A-weighting system), the sound-pressure levels for the lower frequency bands are mathematically reduced by certain amounts (compared with unweighted decibels, in which no correction is made for audio frequency) before they are being combined together to give one single sound-pressure level value in noise meter. The correction is often made because the human ear is less sensitive at low audio frequencies, especially below 1000 Hz, the resulting dB(A) more accurately reflecting the frequency response of the human ear. Typical dB(A) ratings are in the neighbourhood of 25 dB(A), representing 25 A-weighted decibels above the threshold of hearing. This is approximately the loudness of a person whispering in a quiet room.

A commercially available halogen-containing PVdC film was analysed as comparative example as well (**Sample 1**). Suitable commercially-available halogen-containing PVdC films will be apparent for those skilled in the art. For instance, commercial Saranex PVdC barrier films for ostomy applications are provided by Transcendia. An example is Saranex™ 650G.

The structures of the laminated multi-layer films of Samples 2 to 8 are build-up according to the multi-layer film depicted in Fig. 2, and are prepared as follows:
Adhesive hot-nip (70°C) lamination in forward or reverse gravure is typically done in two steps:
   Step 1: dry-adhesive lamination of OPET with a first adhesive layer (skin1);
   Step 2: dry-adhesive lamination of OPET/skin1 with a second adhesive layer (skin2).
Alternatively, both steps are combined on a triplex lamination machine.

In view of the present description, suitable commercially-available skin layers for use in the multi-layer film of the ostomy pouch of the invention will be apparent for those skilled in the art.

The sealable skin layer EBA1 (**Samples 2 to 4**) is a co-extruded multilayer with structure EVA18/EBA30/EVA18. The sealable skin layer EBA2 (**Samples 6 to 8**) is a co-extruded multilayer with structure EMA18/EBA17/ EBA17. Both films are produced as a 40 µm blown film. Production is made at a typical width of 500 mm with a 150 mm Egan 7-layer conical die system (provided by Perry Videx, LLC, Hainesport, USA) equipped with 7 extruders, each extruder having a diameter of 45 mm.

In the context of the present application, the slash "/" depicted in the structures of the multilayers refers to the interface between two consecutive (adjacent) layers.

EBA1 (EVA18/EBA30/EVA18) is a symmetrical coextruded film with 8 µm EVA18 in both the outside and inside layer of the bubble. Outside and inside layers are supplied each by one extruder. One layer is corona treated for further lamination. The core layer of EBA1 contains 24 µm EBA30 supplied by 5 extruders, each extruder containing an equal composition of EBA30.

EBA2 (EMA18/EBA17/EBA17) is a non-symmetrical coextruded film with an 8 µm EBA17 layer corona treated for further lamination. The corona treated layer is supplied by one extruder. Five extruders supply 24 µm EBA17 as core layer and one 1 extruder provides the 8 µm EMA18 seal layer.

The term *"EVA"* or *"ethylene vinyl acetate copolymer"* refers to a copolymer formed with ethylene and vinyl acetate monomers in which the ethylene derived units in the copolymer are present in major amounts, advantageously from about 60 to 98% by weight, and the vinyl acetate-derived units in the copolymer are present in minor amounts, advantageously from about 2 to 40% by weight of the total.

In the context of the present description, EVA18 refers to EVA with 18% vinyl acetate content by weight of the total. An example of EVA18 is commercially-available Escorene® FL00218 from ExxonMobil.

In the context of the present description, EBA30 refers to ethylene butyl acrylate copolymers with a butyl acrylate content of 30% by weight of the total. An example of EBA30 is commercially-available LOTRYL® 30 BA 02 provided by Arkema.

In the context of the present description, EBA17 refers to ethylene butyl acrylate copolymers with a butyl acrylate content of 17% by weight of the total. An example of EBA17 is commercially-available ELVALOY® 3117LG provided by Dupont.

In the context of the present description, EMA18 refers to ethylene methacrylate copolymers with a methacrylate content of 18% by weight of the total. An example of EMA18 is commercially-available LOTRYL® 18 MA 02 provided by Arkema.

The sealable skin layer PE (**Sample 5**) is a blend of low-density polyethylene and linear low-density polyethylene C4 butene with resin ratio 30 to 70. An example of low-density polyethylene is ESCORENE® LD150BW provided by ExxonMobil. An example of linear low-density polyethylene C4 is ESCORENE® LL1001XV provided by ExxonMobil.

As adhesive layer (denoted as adh1) in **Samples 2 and 3**, 3 g/m² of commercially-available high-performance 2-component polyurethane-based LIOFOL® UR3966 with hardener LA6074 from Henkel is used in a ratio 13/1.

As adhesive layer (denoted as adh2) in **Samples 4 to 8**, commercially-available ACRONAL® V215 from BASF Corporation, Charlotte, N.C., USA is used. ACRONAL® V215 is an acrylate copolymer widely used in the art of pressure-sensitive adhesives. It has the following specifications: the solids content is 68 to 70%; the pH value is 3.5 to 6.0; the viscosity at 23° C (Brookfield RVT, Spindle #3, at 50 rpm) is 400 to 2000 cps; the density is about 8.4 lb/gal; the viscosity at 23°C (shear rate 100 sec⁻¹) is 200 to 1000 cps; the mean particle size is about 0.6 µm; the dispersion type is anionic; and the glass-transition temperature (DSC) is about 43°C.

Other acrylate copolymers that can be used as pressure-sensitive adhesive can be obtained from Organic Kimya, Turkey, under the name Orgal® AX1260, and from Henkel Durotak® 3100.

In **Sample 6** and **Sample 7**, 4 g/m² adh2 and 18g/m² adh2 is used as adhesive layer, respectively. In **Samples 4**, **5** and **8**, 11 g/m² adh2 is used as adhesive layer.

Oriented polyethylene terephtalate with different thicknesses have been used as oriented barrier layer, i.e. oPET1 4.5 µm (in **Sample 3**), oPET2 5.7 µm (in **Samples 2**, **4** to **7**), and oPET3 10 µm (in **Sample 8**).

For the A-weighting, the samples are cut into pieces of 12cm x 10cm after which the samples are mounted between clamps into a noise isolated box.

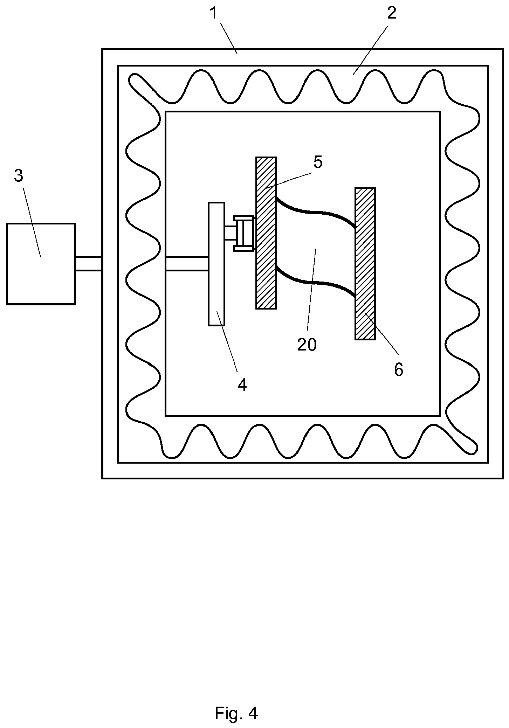

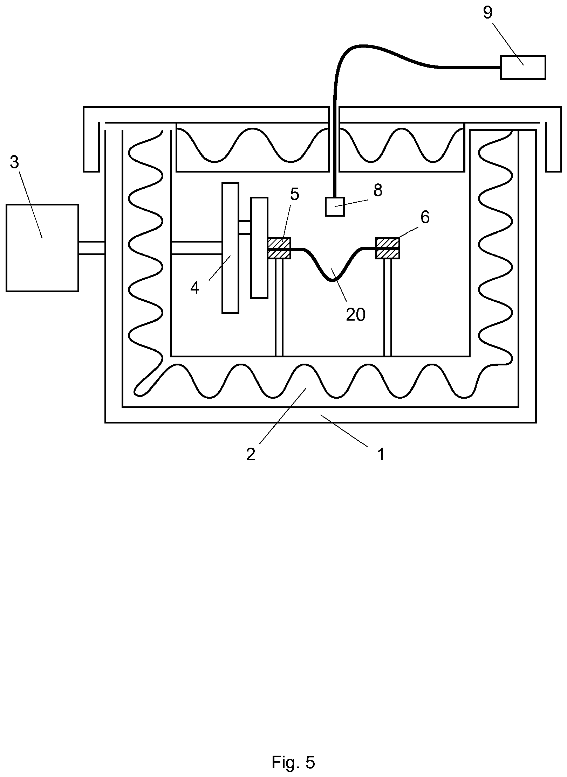

A noise-isolated box 1 is illustrated in **Fig. 4** (top view) and **Fig. 5** (front view). Referring to these figures, the clamps 5, 6 are positioned at a distance of 6.5 cm between each other in the box 1. A sample 20 is clamped and flexed between the clamps 5, 6. The first clamp 6 is fixed, the second clamp 5 moves parallel to the first clamp 6 and is driven by a rotating wheel 4 inside the box 1. The rotating wheel 4 is connected with a motor 3 installed outside the isolated box 1. The motor 3 turns at a frequency of 45 rpm, which gives a momentum of the wheel resulting in maximum displacement of 8 cm of the second plate (clamp) versus the first one inside the box. In this way, the applied motor frequency is generating a speed difference of 6 cm/s between the first clamp and the second clamp. To record the noise generated by the sample 20 during flexing (induced by the motor), a microphone 8 is installed at a distance of 5 cm from the parallel plates. The microphone 8 is connected with a sound-frequency analyser 9. Noise is recorded during 30 seconds of flexing of the sample 20. Each sample measurement is corrected for background noise according to ISO140 standard. The obtained frequency spectrum is divided in 1/3 octave bands. Three independent measurements are taken per sample and the average is taken for data comparison. The calculation of A-weighted average (avg) sound value (expressed in A-weighted decibels, dB(A)) is well within the capabilities of the skilled person.

An overview of the results for the tested samples is given in **Table 1.**

**Table 1: measured noise values for various laminated multi-layer films**

| **Sample** | **Structure** | **Total A-weighted avg sound for 16 to 16 000 Hz (in dB(A))** |
|---|---|---|
| 1 | Comparative example | 70 |
| 2 | EBA1/adh1/oPET2/adh1/EBA1 | 72 |
| 3 | EBA1/adh1/oPET1/adh1/EBA1 | 71 |
| 4 | EBA1 /adh2/oPET2/adh2/EBA 1 | 67 |
| 5 | PE/adh2/oPET2/adh2/PE | 82 |
| 6 | EBA2/adh2/oPET2/adh2/EBA2 | 73 |
| 7 | EBA2/adh2/oPET2/adh2/EBA2 | 73 |
| 8 | EBA2/adh2/oPET3/adh2/EBA2 | 73 |

From these results, it can be seen that, while being flexed, samples of laminated multi-layer films reach the noise levels of a commercially-available halogen-containing PVdC film. Comparison of the results obtained for **Samples 6** and **7** also show that the thickness of the adhesive layer does not influence the measured noise value.

Furthermore, based on the results, using ethylene-based copolymers as skin layer is slightly preferred over using a pure polyethylene skin layer.

### B. Odour measurements

In this example, the odour transmission of the samples of example A is determined according to ISO 8670/3 standard. An overview of the results is given in **Table 2.**

**Table 2: odour transmission for various laminated multi-layer films**

| | | **Odour panel score** | | |
|---|---|---|---|---|
| **Sample** | **Structure** | **after 4h** | **after 8h** | **after 24h** |
| 1 | Comparative example | 0.3 | 0.3 | 0.3 |
| 2 | EBA1/adh1/oPET2/adh1/EBA1 | 0.4 | 0.5 | 0.5 |
| 3 | EBA1/adh1/oPET1/adh1/EBA1 | 1 | 1.3 | 1.4 |
| 4 | EBA1 /adh2/oPET2/adh2/EBA 1 | 0.4 | 0.5 | 0.5 |
| 5 | PE/adh2/oPET2/adh2/PE | 0.4 | 0.5 | 0.5 |
| 6 | EBA2/adh2/oPET2/adh2/EBA2 | 0.4 | 0.5 | 0.5 |
| 7 | EBA2/adh2/oPET2/adh2/EBA2 | 0.4 | 0.5 | 0.5 |
| 8 | EBA2/adh2/oPET3/adh2/EBA2 | 0.3 | 0.3 | 0.3 |

From these results, it can be seen that the odour transmission of the laminated multi-layer films of **Samples 2** and **4 to 8** is comparable to the odour transmission of the commercially-available halogen-containing PVdC film (**Sample 1**).

The odour transmission of **Sample 3** is substantially higher compared to the other samples due to the use of a very thin (4,5 µm) OPET1 barrier layer.

The results of **Tables 1 and 2** are further compared to the noise produced by a non-oriented PETG (not according to the invention) used in the art as halogen-free barrier material. The odour transmission was evaluated as well.

7µm non-oriented PETG exhibited a noise level of 67 dB(A) (using the method of A-weighting of example A). The odour score was 2 after 8h (measured according to ISO 8670/3). The non-oriented PETG thus produces low noise; however, it has clearly limited barrier properties against odour, which is just to be avoided for use in ostomy applications.

From the description and examples above, it follows that the laminated multi-layer films of the ostomy pouch of the invention exhibit excellent noise properties, in addition to being substantially chlorine-free, the latter being extremely advantageous for environmental reasons. Moreover, the used oriented barrier films have good aroma-barrier properties. Therefore, the laminated multi-layer films of the ostomy pouch of the invention are highly suitable for use in the production of ostomy bags or incontinence bags, matching the quality of conventional chlorinated films for use in such appliances.

## Claims

1. An ostomy pouch comprising a laminated, substantially chlorine-free, multi-layer film (10), said multi-layer film (10) comprising:
- at least one barrier layer (11), and
- at least one sealable skin layer (12),
wherein
- the barrier layer is an oriented barrier layer comprising oriented polyester or oriented polypropylene, and
- the skin layer comprises styrene-based copolymers, ethylene-based (co)polymers, thermoplastic polyurethanes, cyclic olefin based (co)polymers, ionomer resins, elastomeric polyesters, or any kind of blends thereof.

2. The ostomy pouch of Claim 1, wherein the multi-layer film (10) comprises one barrier layer or a laminated stack of barrier layers.

3. The ostomy pouch of Claims 1 or 2, wherein the barrier layer is a single layer or a co-extruded multilayer.

4. The ostomy pouch of any one of the preceding claims, wherein the barrier layer (11) comprises oriented polyester, preferably bi-axially oriented polyester.

5. The ostomy pouch of any one of the preceding claims, wherein the oriented polyester comprises oriented polyethylene terephtalate or oriented polyethylene naphthalate, preferably oriented polyethylene terephtalate.

6. The ostomy pouch of any one of the preceding claims, wherein the multi-layer film (10) comprises one skin layer (12) or two skin layers (12, 13).

7. The ostomy pouch of Claim 6, wherein the skin layer is a single layer or a co-extruded multilayer, preferably a co-extruded multilayer.

8. The ostomy pouch of any one of the preceding claims, wherein the skin layer is a blend of low-density polyethylene and linear low-density polyethylene.

9. The ostomy pouch of Claim 8, wherein the skin layer is a blend of low-density polyethylene and linear low-density polyethylene C4 butene with resin ratio 30 to 70.

10. The ostomy pouch of any one of Claims 1 to 7, wherein the skin layer is a co-extrudate of ethylene vinyl acetate copolymer and ethylene butyl acrylate copolymer, or a co-extrudate of ethylene methyl acrylate copolymer and ethylene butyl acrylate copolymer.

11. The ostomy pouch of Claim 10, wherein
- the skin layer is a co-extruded multilayer of EVA and EBA, the EVA having a vinyl acetate content between 16 and 20% by weight, preferably of 18% by weight, and the EBA having a butyl acrylate content between 25 and 35% by weight, preferably of 30% by weight, or
- the skin layer is a co-extruded multilayer of EMA and EBA, the EMA having a methacrylate content between 16 and 20% by weight, preferably of 18% by weight, and the EBA having a butyl acrylate content between 15 and 19% by weight, preferably of 17% by weight.

12. The ostomy pouch of Claim 11, wherein the skin layer is
- a co-extruded multilayer comprising EVA having a vinyl acetate content between 16 and 20% by weight/EBA having a butyl acrylate content between 25 and 35% by weight/EVA having a vinyl acetate content between 16 and 20% by weight, preferably EVA having a vinyl acetate content of 18% by weight/EBA having a butyl acrylate content of 30% by weight/EVA having a vinyl acetate content of 18% by weight; or
- a co-extruded multilayer comprising EMA having a methacrylate content between 16 and 20% by weight/EBA having a butyl acrylate content between 15 and 19% by weight/EBA having a butyl acrylate content between 15 and 19% by weight, preferably EMA having a vinyl acetate content of 18% by weight/EBA having a butyl acrylate content of 17% by weight/EBA having a vinyl acetate content of 17% by weight.

13. The ostomy pouch of any one of Claims 2 to 12, comprising an adhesive layer (14) positioned between the skin layer and the barrier layer (11) or between the skin layer and the stack of barrier layers, wherein the adhesive layer is obtained from a pressure-sensitive adhesive, preferably from a curable pressure-sensitive adhesive.

14. The ostomy pouch of any one of Claims 2 to 13 having at least one wall formed from the laminated, substantially chlorine-free, multi-layer film (10), said film (10) comprising one oriented barrier layer (11) or stack of oriented barrier layers, one skin layer (12), and one adhesive layer (14) positioned between the skin layer (12) and the barrier layer (11) or between the skin layer (12) and the stack of barrier layers, wherein the adhesive layer (14) is in direct contact with the facing surfaces of the barrier layer (11) or of the stack of barrier layers and the skin layer (12).

15. The ostomy pouch of any one of Claims 2 to 14 having at least one wall formed from the laminated, substantially chlorine-free, multi-layer film (10), said film (10) comprising one oriented barrier layer (11) or stack of oriented barrier layers, two skin layers (12, 13), and two adhesive layers (14, 15), wherein the barrier layer (11) or stack of barrier layers is positioned in between the two skin layers (12, 13); the two adhesive layers (14, 15) being provided on opposite sides of the barrier layer or of the stack of barrier layers, the adhesive layer (14, 15) on either side of the barrier layer (11) or of the stack of barrier layers being in direct contact with the facing surfaces of the barrier layer (11) or of the stack of barrier layers and the skin layer (12, 13).

16. A method for fabricating the substantially chlorine-free multi-layer film of the ostomy pouch of any one of Claims 2 to 15, the method comprising the steps of:
(a) forming the at least one oriented barrier layer (11), preferably forming one barrier layer (11) or laminated stack of barrier layers;
(b) bonding the at least one skin layer (12) to the at least one oriented barrier layer (11) by adhesive lamination or extrusion lamination, preferably by adhesive lamination.

17. The method of Claim 16, wherein the adhesive layer is obtained from a solvent-based composition comprising one or more components selected from the group consisting of (co)polymers, oligomers and monomers; the solvent being selected from the group consisting of organic solvents, water and mixtures thereof, or from a solvent-free composition.

18. The method of Claim 17, wherein for the solvent-based adhesive composition, the adhesive layer is obtained from evaporating the solvent and optionally curing the composition.

19. The method of Claim 18, wherein curing is performed by heat and/or by actinic irradiation.
